# EUROPEAN PATENT SPECIFICATION

(11) **EP 3 093 778 B1**
(45) Date of publication and mention of the grant of the patent: **01.01.2020**
(21) Application number: 16169679.4
(22) Date of filing: 13.05.2016
(51) Int. Cl.: G06F 16/957

(54) **GENERATING GRAPHICAL REPRESENTATIONS OF DATA USING MULTIPLE RENDERING CONVENTIONS**
ERZEUGUNG VON GRAFISCHEN DARSTELLUNGEN VON DATEN UNTER VERWENDUNG MEHRERER RENDERINGKONVENTIONEN
GÉNÉRATION DE REPRÉSENTATIONS GRAPHIQUES DE DONNÉES AU MOYEN DE MULTIPLES CONVENTIONS DE RENDU

(30) Priority: 14.05.2015 US 201562161737 P
(43) Date of publication of application: 16.11.2016
(73) Proprietor: Palantir Technologies Inc., Palo Alto, CA 94301 (US)
(72) Inventor: Gray, Gilad, Palo Alto, CA 94301 (US); Slatcher, Timothy, Palo Alto, CA 94301 (US); Rogers, Callum, Palo Alto, CA 94301 (US)
(74) Representative: Sayer, Robert David

(56) References cited:
- US-A1- 2010 223 577
- US-A1- 2015 106 758
- Mat Groves: "To DOM or not to DOM?", , 11 April 2013 (2013-04-11), pages 1-4, XP055302076, Retrieved from the Internet: URL:http://web.archive.org/web/20130411035 609/http://www.goodboydigital.com/to-dom-o r-not-to-dom [retrieved on 2016-09-13]
- Kirupa Chinnathambi: "DOM vs. Canvas", , 10 May 2013 (2013-05-10), pages 1-4, XP055547159, Retrieved from the Internet: URL:http://web.archive.org/web/20130510031 114/https://www.kirupa.com/html5/dom_vs_ca nvas.htm [retrieved on 2019-01-24]

## Description

### TECHNICAL FIELD

The subject matter disclosed herein relates to data processing. In particular, example embodiments may relate to techniques for generating graphical representations of data.

### BACKGROUND

In conventional practice, there exist a number of approaches for rendering content within web browsers, and each individual approach has certain advantages and disadvantages. For example, a traditional approach involves rendering content by using cascading style sheets (CSS) styles to position, size, and color regular domain object model (DOM) elements. In this traditional approach, the background of the content may be represented as a table, and free-moving elements may be overlaid on top of the table using positioned elements. The above referenced approach may, however, become problematic when rendering content such as graphs with a large number of nodes due to the amount of computational and network resources consumed by rendering the content in this manner.

Another traditional approach often employed involves using a specialized element within the hypertext markup language (HTML) called the canvas element. A canvas element is a single DOM element that consists of a drawable region defined in HTML and provides a programming interface for drawing shapes onto the space take up by the node. Although canvas elements may be used to build graphs, animations, games and other image compositions, the quality of detailed images produced by rendering with canvas elements is low, and rendered text may be difficult, if not impossible, to read.

US 2015/0106758 A1 discloses a system that renders a graphical representation in either one of two rendering conventions depending on a user-set scale level.

Mat Groves: "To DOM or not to DOM", http://web.archive.org/web/20130411035609/http:// www.goodboydigital.com/to-dom-or-not-to-dom postulates decision making to either render with DOM or CANVAS depending on the expected performance.

Anonymous: "DOM vs. CANVAS", http://web.archive.org/web/20130510031114/https:// www.kirupa.com/html5/dom_vs_canvas.htm postulates decision making to either render with DOM or CANVAS next to others depending on the complexity of the visualization.

### BRIEF DESCRIPTION OF THE DRAWINGS

FIG. 1 is an architecture diagram depicting a data processing platform having a client-server architecture configured for exchanging and graphically representing data.
FIG. 2 is a block diagram illustrating various modules comprising a graphing application, which is provided as part of the data processing platform.
FIG. 3 is a flowchart illustrating a method for rendering a graphical representation of a dataset at varied scaled views.
FIGs. 4A-C are interface diagrams illustrating a graphical representation of a single dataset at varied scale levels.
FIG. 5 is a flowchart illustrating a method for rendering views of multiple portions of a graphical representation of a dataset.
FIG. 6A and 6B are interface diagrams illustrating views of multiple portions of a graphical representation of a single dataset.
FIG. 7 is a diagrammatic representation of a machine in the example form of a computer system within which a set of instructions for causing the machine to perform any one or more of the methodologies discussed herein may be executed.

The invention is defined by the attached claims.

### DETAILED DESCRIPTION

Aspects of the present disclosure relate to generating graphical representations of data.

They involve a browser-based graphing application that uses a variety of different rendering conventions under different circumstances to optimize performance and decrease consumed computational and network resources. By using different rendering conventions in the graphing of a single dataset, the graphing application may avoid a number of pitfalls associated with each individual rendering convention. As an example of the foregoing, the graphing application may employ a first rendering convention to render a graph of an entire set of data. A user viewing the graph may zoom in to a specific portion of the graph to view that portion in more detail. Upon determining that the user has zoomed into the graph beyond a critical breakpoint (e.g., a threshold defined by an administrator), the graphing application may use a second rendering convention to render a scaled (e.g., zoom-in) view of the specific portion of the graph. Additional aspects of the present disclosure involve reusing or recycling graph elements to further enhance performance of the graphing application.

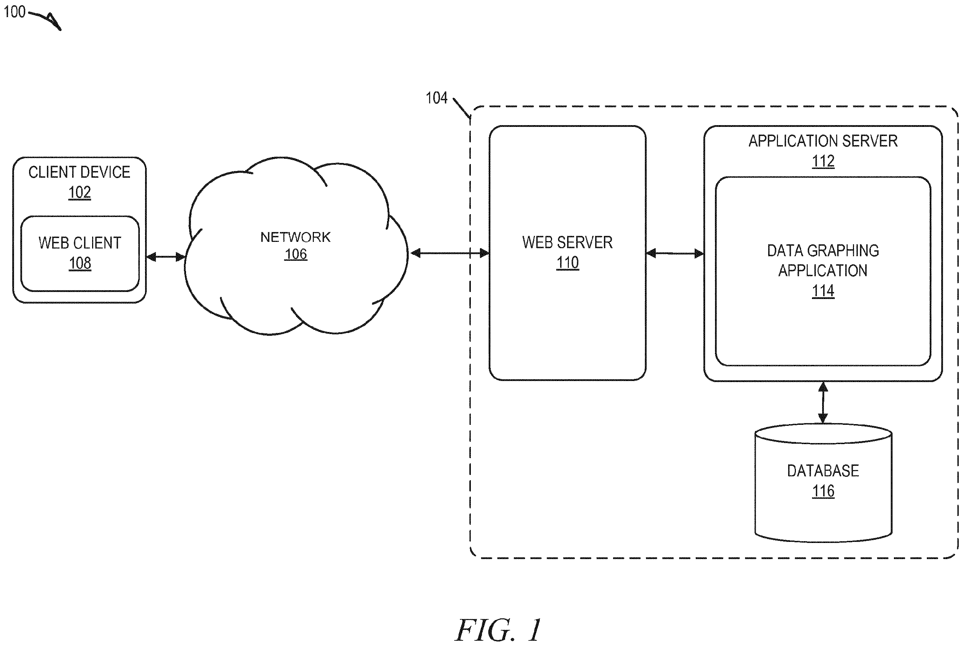

FIG. 1 is an architecture diagram depicting a network system 100 having a client-server architecture configured for exchanging and graphically representing data. While the network system 100 shown in FIG. 1 employs client-server architecture, the present inventive subject matter is, of course, not limited to such an architecture, and could equally well find application in an event-driven, distributed, or peer-to-peer architecture system, for example. Moreover, it shall be appreciated that although the various functional components of the network system 100 are discussed in the singular sense, multiple instances of one or more of the various functional components may be employed.

The network system 100 provides a number of data processing and graphing services to users. As shown, the network system 100 includes a client device 102 in communication with a data processing platform 104 over a network 106. The data processing platform 104 communicates and exchanges data with the client device 102 that pertains to various functions and aspects associated with the network system 100 and its users. Likewise, the client device 106, which may be any of a variety of types of devices that includes at least a display, a processor, and communication capabilities that provide access to the network 104 (e.g., a smart phone, a tablet computer, a personal digital assistant (PDA), a personal navigation device (PND), a handheld computer, a desktop computer, a laptop or netbook, or a wearable computing device), may be operated by a user (e.g., a person) of the network system 100 to exchange data with the data processing platform 104 over the network 102.

The client device 102 communicates with the network 104 via a wired or wireless connection. For example, one or more portions of the network 104 may comprises an ad hoc network, an intranet, an extranet, a Virtual Private Network (VPN), a Local Area Network (LAN), a wireless LAN (WLAN), a Wide Area Network (WAN), a wireless WAN (WWAN), a Metropolitan Area Network (MAN), a portion of the Internet, a portion of the Public Switched Telephone Network (PSTN), a cellular telephone network, a wireless network, a Wireless Fidelity (Wi-Fi®) network, a Worldwide Interoperability for Microwave Access (WiMax) network, another type of network, or any suitable combination thereof.

The data exchanged between the client device 102 and the data processing platform 104 may involve user-selected functions available through one or more user interfaces (UIs). The UIs may be specifically associated with a web client 108 (e.g., a browser), executing on the client device 102, and in communication with the data processing platform 104.

Turning specifically to the data processing platform 104, a web server 110 is coupled to (e.g., via wired or wireless interfaces), and provides web interfaces to an application server 112. The application server 112 hosts one or more applications (e.g., web applications) that allow users to use various functions and services of the data processing platform 104. For example, the application server 112 may host a data graphing application 114 that supports rendering of graphical representations of sets of data. The graphing application 114 may run and execute on the application server 112, or the application server 112 may provide the client device 102 with a set of instructions (e.g., computer-readable code) that cause the web client 108 of client device 102 to execute and run the graphing application 114.

A user of the data processing platform 104 may specify the datasets that are to be graphically rendered using the data graphing application 114. These datasets may be stored, for example, in a database 118 that is communicatively coupled to the application server 114 (e.g., via wired or wireless interfaces). The data processing platform 104 may further include a database server (not shown) that facilities access to the database 118. The database 118 may include multiple databases that may be internal or external to the data processing platform104. In some instances, a user may specify a dataset stored on a machine-readable medium of the client device 102 for graphical rendering by the graphing application 114.

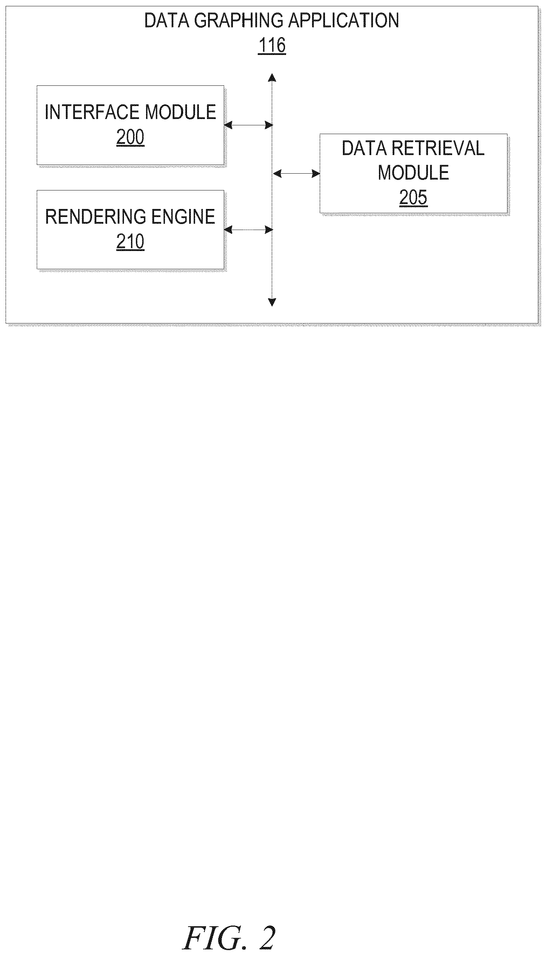

FIG. 2 is a block diagram illustrating various modules comprising the data graphing application 114, which is provided as part of the data processing platform 104.

As is understood by skilled artisans in the relevant computer and Internet-related arts, the modules and engines illustrated in FIG. 2 represent a set of executable software instructions and the corresponding hardware (e.g., memory and processor) for executing the instructions. To avoid obscuring the inventive subject matter with unnecessary detail, various functional components (e.g., modules and engines) that are not germane to conveying an understanding of the inventive subject matter have been omitted from FIG. 2. However, a skilled artisan will readily recognize that various additional functional components may be supported by the data graphing application 114 to facilitate additional functionality that is not specifically described herein. Furthermore, the various functional modules and engines depicted in FIG. 2 may reside on a single computer (e.g., a client device), or may be distributed across several computers in various arrangements such as cloud-based architectures.

The data graphing application 114 is shown as including an interface module 200, a data retrieval module 205, and a rendering engine 210, all configured to communicate with each other (e.g., via a bus, shared memory, a switch, or application programming interfaces (APIs)). The aforementioned modules of the data graphing application 114 may, furthermore, access one or more databases that are part of the data processing platform 104 (e.g., database 118), and each of the modules may access one or more computer readable storage mediums of the client device 106.

The interface module 200 is responsible for handling user interactions related to the functions of the data graphing application 114. Accordingly, the interface module 200 may provide a number of interfaces to users (e.g., interfaces that are presented by the client device 102) that allow the users to view and interact with graphical representations of data. To this end, the interfaces provided by the interface module 200 may include one or more graphical interface elements (e.g., buttons, toggles, switches, drop-down menus, or sliders) that may be manipulated through user input to perform various operations associated with graphing data. For example, the interface module 200 may provide elements that allow users to adjust the scale level of graphical representations, to adjust a view of graphical representations so as to view various different portions of the data in detail, to adjust the size or position of graphical elements, or to add, remove, or edit elements (e.g., nodes or edges) or aspects of graphical representations of data. The interface module 200 also receives and processes user input received through such interface elements.

The data retrieval module 205 is configured to retrieve data for graphical rendering. The data retrieval module 205 may obtain data for rendering from a location specified by a user (e.g., via a user interface provided by the interface module 200). In some instances, the data may be retrieved from a local storage component of the client device 102. In other instances, the data may be retrieved from a network storage device (e.g., the database 118) of the data processing platform 104 or a third party server. The application server 114 may provide the data that is to be rendered to the client device 102 along with the computer-readable instructions that cause the client device 102 to be configured to execute and run the data graphing application 114.

The rendering engine 210 is responsible for graphical rendering (e.g., generating graphs) of data. The graphical representations generated by the rendering engine 210 include multiple nodes and multiple edges. The edges represent relationships between nodes, and depending on the data that is being rendered, the nodes may represent combinations of people, places (e.g., geographic locations, websites or webpages), or things (e.g., content, events, applications).

The rendering engine 210 may employ a variety of different rendering conventions in rendering graphical representations of data. In particular, for datasets with few nodes, the rendering engine 210 may employ a rendering convention that provides high quality representations (e.g., high quality images) of nodes along with detailed textual information. For example, the rendering engine 210 may cause the web client 108 to render the nodes of the graphical representation in the HTML DOM, which excels at rendering high-quality images, text, and shadows. This allows for more detailed graphical representation when up close. In this rendering convention, CSS styles may be used to color, size, and position elements corresponding to nodes and edges of a graphical representation.

For datasets with a large number of nodes, the rendering engine 210 may use a rendering convention that is able to render a large number of nodes while limiting the amount of consumed resources by providing minimalistic (e.g., bitmap) representations of data nodes without additional information. For example, the rendering engine 210 may use a specialized element of HTML such as the canvas element to render large numbers of nodes. The canvas element excels at bitmap graphics and can render large numbers of simple shapes incredibly quickly. It requires less memory for each individual shape than the DOM representation and can therefore handle a much larger data scale. Because the canvas element results in lower quality representations (e.g., lower quality images) of nodes without additional textual information, the computational and network resources used for rendering are lower than that which is necessary for rendering nodes using other rendering conventions such as the DOM. Thus, certain rendering conventions employed by the rendering engine 210 may be better suited and used for rendering a large number of nodes while other rendering conventions may be better suited and used for rendering a small number of nodes.

The rendering engine 210 may, in some instances, toggle between different rendering conventions in rendering graphical representations of the same set of data. The particular rendering convention employed may depend on the number of nodes that are to be represented, which may, in some instances, be a function of a user specified scale level for the graphical representation. The "scale level" refers to the proportional size of elements in a graphical representation relative to an unscaled global view of the entire set of data. Those skilled in the art may recognize that the aforementioned scale level is associated with and may be adjusted using zoom functionality (e.g., the ability to zoom in or out) commonly provided to users in connection with the presentation of content, and also provided by the user interface module 200 to users of the graphing application 114.

By increasing the scale level (e.g., by zooming in), users may further investigate particular portions of the graphical representation of the dataset. Conversely, by decreasing the scale level (e.g., by zooming out), users are provided with a global perspective of elements in the graphical representation of the dataset. Accordingly, an adjustment to the scale level may cause elements in the graphical representation to either enlarge (e.g., increase in size) or shrink (e.g., decrease in size). Adjustment to the scale level may also affect the number of nodes rendered by the rendering engine 210. For example, a user specified increase in scale level may result in fewer nodes being presented on the display of the client device 102 because the size of the entire graphical representation at the specified scale level may be greater than the size of the display. To address the foregoing issues presented with rendering data at different scale levels, the rendering engine 210 may toggle between rendering conventions in response to adjustments in scale level. For example, in initially rendering a graphical representation of data, the rendering engine 210 uses a first rendering convention (e.g., the canvas element). In response to a user adjusting the scale level to exceed a predefined threshold, the rendering engine 210 renders the graphical representation using a second rendering convention (e.g., render all nodes in DOM). The transition from the first rendering convention to the second rendering convention may include synchronizing views of the two rendering conventions. Graphical representations resulting from the first rendering convention include low quality representations (e.g., a simple shape) of the data nodes and edges without additional information, while the graphical representations resulting from the second rendering convention include high quality representations of the data nodes (e.g., images or icons) and edges with additional textual information (e.g., a label, values, or attributes).

The rendering engine 210 may individually analyze each node in a graphical representation to determine whether the scale level exceeds the predefined threshold, and render each node according to such analysis. In other words, the rendering engine 210 determines whether the scale level is exceeded on a per-node basis. Accordingly, the rendering engine 210 may employ different rendering conventions to render nodes in the same graphical representation. For example, a given graphical representation generated by the rendering engine may include a first group of nodes, which are rendered according to a first rendering convention, represented simply with a shape or block, and a second group of nodes, which are rendered according to a second rendering convention, represented by detailed icons (e.g., image files) with additional textual information about the nodes.

To further reduce the amount of computational and network resources involved in rendering graphical representations of data, the rendering engine 210 may also recycle nodes from different views of a particular graphical representation of data. For example, prior to switching from a view of a first portion of the data in the graphical representation to a view of a second portion of the data, the rendering engine 210 may store copies of data files (e.g., icons or image files) used to represent nodes. In rendering the view of the second portion of the data, the rendering engine 210 may retrieve and reuse the data files to represent nodes in the second portion of the data.

The rendering engine 210 may use node masks to synchronize nodes and edges during animations due to layouts and other such interactions. In particular, the rendering engine 210 may use node masks to provide intermediate "visual" node positions as nodes move across the screen, and in doing so, provide the "real" onscreen location instead of the position stored in the data structure (e.g., the final position).

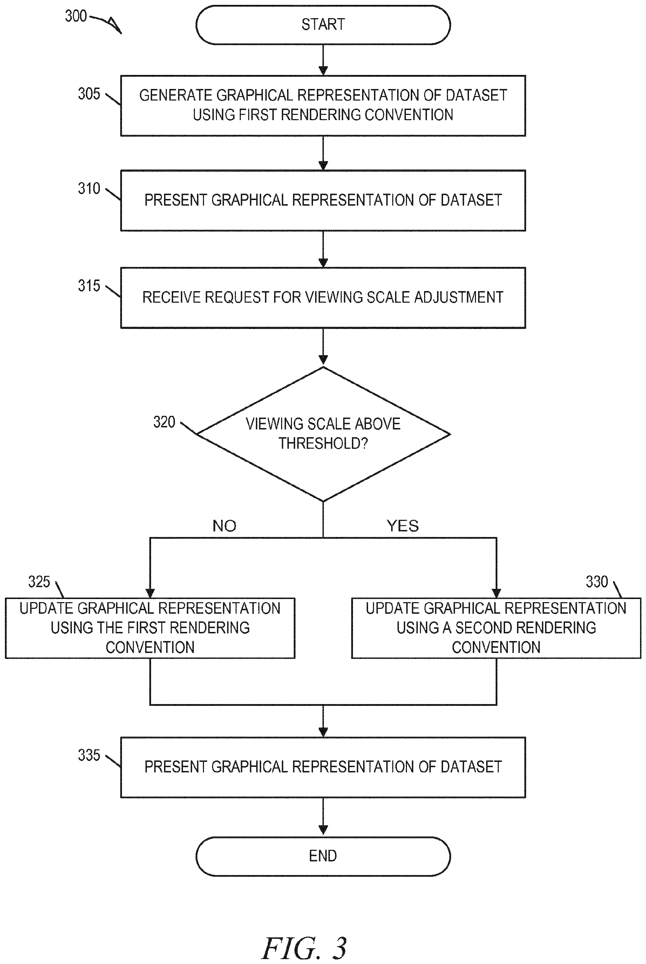

FIG. 3 is a flowchart illustrating a method 300 for rendering a graphical representation of a dataset at varied scaled views. The method 300 may be embodied in computer-readable instructions for execution by one or more processors such that the operations of the method 300 may be performed in part or in whole by the client device 102. In particular, application server 114 may transmit computer-readable instructions to the client device 102 that, when executed by the web client 108, cause the client device 102 to become specially configured to include the functional components (e.g., modules and engines) of the data graphing application 114. Accordingly, the method 300 is described below by way of example with reference thereto. However, it shall be appreciated that at least some of the operations of method 300 may be deployed on various other hardware configurations and is not intended to be limited to the client device 102. For example, the server 114 may perform at least some of the operations of the method 300.

At operation 305, the rendering engine 210 generates an initial graphical representation of a dataset using a first rendering convention. The dataset may be specified by a user via an interface provided by the interface module 200, and may be retrieved either from local storage (e.g., a machine-readable medium of the client device 102) or from a networked storage device (e.g., the database 116) by the data retrieval module 205. The graphical representation of the dataset includes a plurality of nodes and a plurality of edges that represent relationships between the nodes. The initial graphical representation of the dataset corresponds to a global view of the dataset, and as such, the initial graphical representation of the dataset may include a large number of nodes and edges. Accordingly, the first rendering convention employed by the rendering engine 210 is a rendering convention suitable for representing a large number of nodes. For example, the rendering engine 210 may employ a rendering convention such as the canvas element of HTML that is able to render a large number of nodes without being overly burdensome in terms of computational resources.

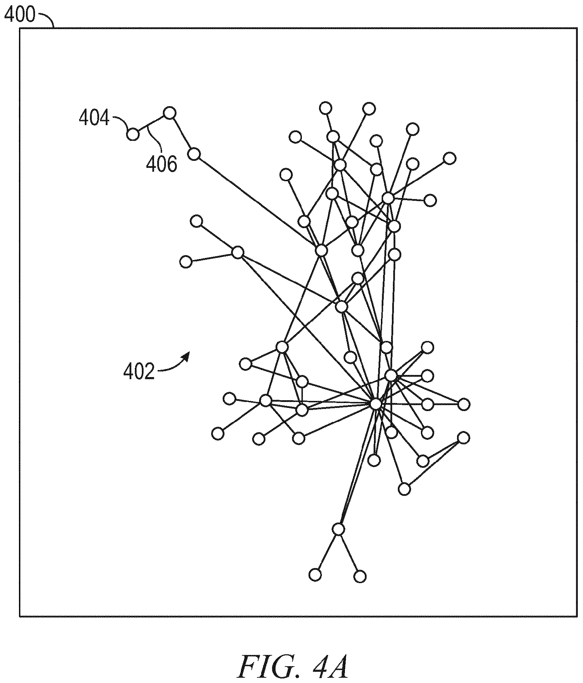

At operation 310, the rendering engine 210 causes the initial graphical representation to be presented on a display of the client device 102. As an example, FIG. 4A is an interface diagram illustrating a global view 400 of a graphical representation of a dataset 402. The global view 400 of the dataset 402 is an unscaled (e.g., zero scale level) view of the dataset that provides a depiction of the entire dataset (e.g., all nodes and edges included the dataset). Accordingly, the global view 400 of the graphical representation of the dataset includes a plurality of nodes 404 and a plurality of edges 406 that represent relationships between the nodes 404. As shown, a simple icon (e.g., a symbol) is used to represent each of the plurality of nodes 404 in the global view 400 of the dataset 402.

Referring back to FIG. 3, at operation 315, the interface module 200 receives user input (e.g., via an input component of the client device 102) requesting a viewing scale adjustment of the graphical representation of the dataset. In some instances, a user may request to increase the viewing scale (e.g., zoom-in) of the graphical representation to further assess local trends in particular portions of the dataset. In other instances, the user may request to decrease the viewing scale (e.g., zoom-out) of the graphical representation to assess global trends in the dataset. In either instance, at operation 320, the rendering engine 210 determines whether the adjustment to the viewing scale causes the viewing scale to be above a predefined threshold. The predefined threshold may be set by an administrator of the data graphing application 114, and may be set to optimize the quality of the graphical representation as learned through heuristic methods (e.g., by analyzing rendering quality at various scale levels to identify the breakpoint in quality).

If the rendering engine 210 determines that the viewing scale is not above the predefined threshold, the rendering engine 210 updates the graphical representation of the data set using the first rendering convention and in accordance with the user specified viewing scale, at operation 325.

If the rendering engine 210 determines that the viewing scale is above the predefined threshold, the rendering engine 210 updates the graphical representation of the data set using the second rendering convention and in accordance with the user specified viewing scale, at operation 330. The updating of the graphical representation includes rendering a local view of a portion of the dataset that includes a subset of the plurality of nodes. The updating of the graphical representation of the dataset may further include resizing a subset of the plurality of nodes presented in the local view. The second rendering convention may be a rendering convention suitable for providing high quality representations of a low number of nodes with additional textual information (e.g., rendering all nodes in the DOM). The updating of the graphical representation may further comprise rendering textual information associated with each node of the subset of the plurality of nodes.

Prior to transitioning to rendering using the second rendering convention, the application server 114 may transmit one or more updates (e.g., changes to HTML attributes or CSS classes that are added or removed) that serve to synchronize views of the respective rendering conventions. Updates may be provided in a single transmission so as to reduce the amount of consumed network resources.

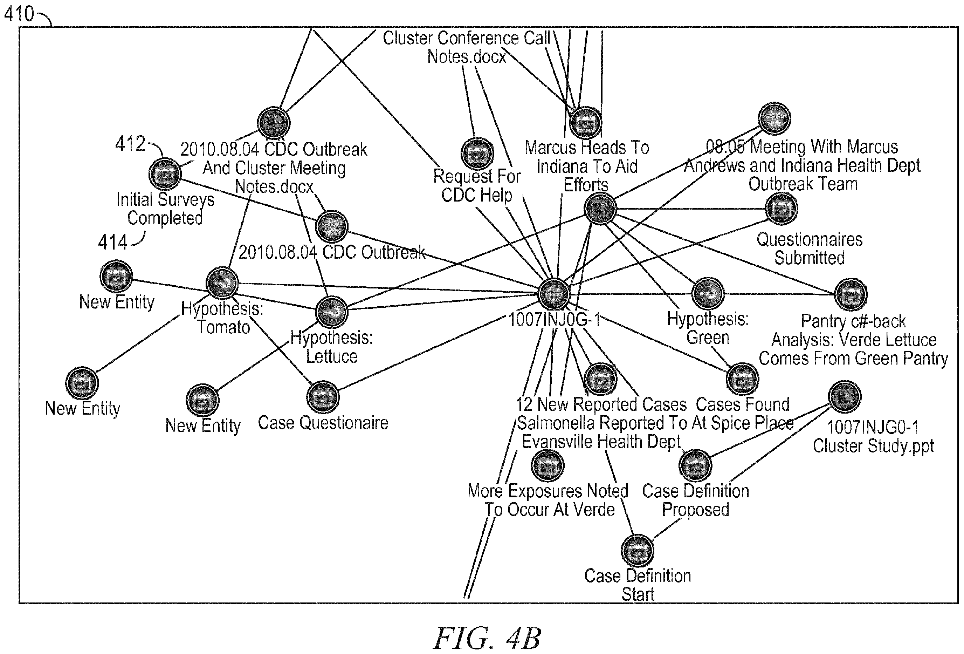

At operation 335, the rendering engine 210 causes the updated view of the graphical representation to be presented on a display of the client device 102. As an example, FIG. 4B is an interface diagram illustrating a local view 410 of the graphical representation of the dataset 402. As shown, the local view 410 includes a portion of the plurality of nodes (e.g., node 404) depicted in the global view 400 of FIG. 4A. The nodes included in the local view 410 are represented using a detailed icon (e.g., a high resolution image or symbol), and as shown, each node is presented along with detailed information about the node. The detailed information may, for example, include a title or label, a value, or attributes associated with the node. For example, as shown, node 412 includes label 414.

In some instances, the size of each node of the multiple nodes included in a graphical representation may vary depending on, for example, user specifications, the type of data being represented by the graphical representation, the type of node being represented, or the value corresponding to the node. In these instances, some nodes in the graphical representation may be clearly visible at certain scale levels while other nodes may not. Accordingly, the rendering engine 210 may determine whether the adjustment to the viewing scale causes the viewing scale to be above a predefined threshold (operation 320) on a per-node basis, and for each node in the plurality of nodes. The predefined threshold may depend on the size of the node. Depending on the scale level after the adjustment by the user, the updating of the graphical representation (operation 330) may include rendering a first portion of the plurality of nodes using the first rendering convention (e.g., nodes below the predefined threshold), and rendering a second portion of the plurality of nodes using the second rendering convention (e.g., nodes above the predefined threshold).

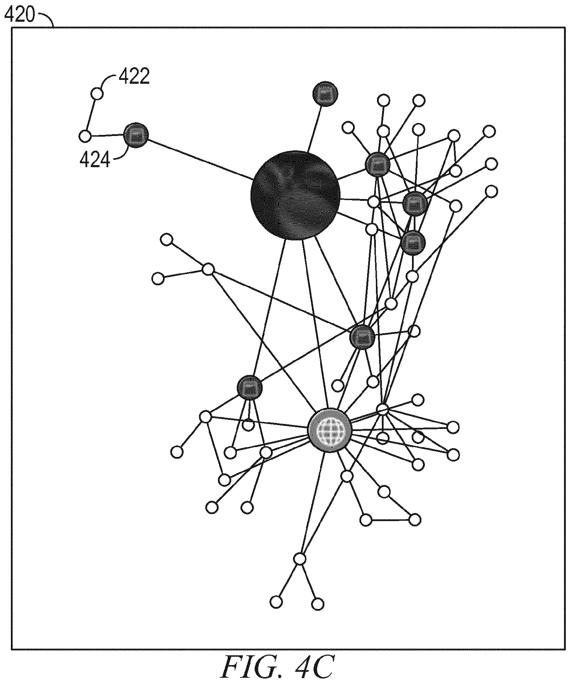

For example, FIG. 4C illustrates an interface diagram illustrating a local view 420 of the graphical representation of the dataset 402. As shown, the local view 420 includes a plurality of nodes rendered using one of two rendering conventions. For example, the node 422 may be rendered using a first rendering convention, which results in the node 422 being represented using a circle. In contrast, the node 422 may be rendered using a second rendering convention, which results in the rendering of a representation beyond a mere shape (e.g., an icon resembling a document).

In some instances, further user input may be received by interface module 200 relating to additional requests for viewing scale adjustments to the graphical representation of the dataset. In instances in which the user input is to further increase the viewing scale (e.g., further zoom-in) of the graphical representation of the dataset or to decrease the viewing scale (e.g., to zoom-out) to a level that is still above the predefined threshold, the rendering engine 210 continues to render the graphical representation using the second rendering convention in response to determining that the scale level continues to be below the threshold level. In instances in which the user input is to decrease the viewing scale to a level that is once again below the predefined threshold, the rendering engine 210 transitions back to the first rendering convention to render the graphical representation at the newly requested scale level in response to determining the scale level is below the predefined threshold.

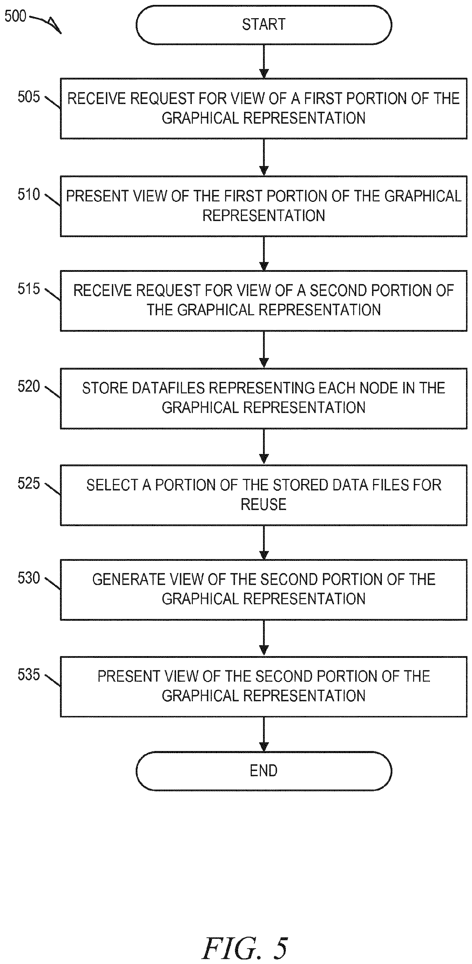

FIG. 5 is a flowchart illustrating a method for rendering views of multiple portions of a graphical representation of a dataset. The method 500 may be embodied in computer-readable instructions for execution by one or more processors such that the operations of the method 500 may be performed in part or in whole by the client device 102. In particular, application server 114 may transmit computer-readable instructions to the client device 102 which, when executed by the web client 108, cause the client device 102 to become specially configured to include the functional components (e.g., modules and engines) of the data graphing application 114. Accordingly, the method 500 is described below by way of example with reference thereto. However, it shall be appreciated that at least some of the operations of method 500 may be deployed on various other hardware configurations and is not intended to be limited to the client device 102. For example, the server 114 may perform at least some of the operations of the method 500.

At operation 505, the interface module 200 receives user input requesting a view (e.g., a zoomed-in or local view) of a first portion of a graphical representation of a dataset. At operation 510, the rendering engine 210 causes the view of the graphical representation of the dataset to be presented on the client device 102. The view of the first portion of the graphical representation of the dataset includes a view of a first subset of the nodes in the dataset.

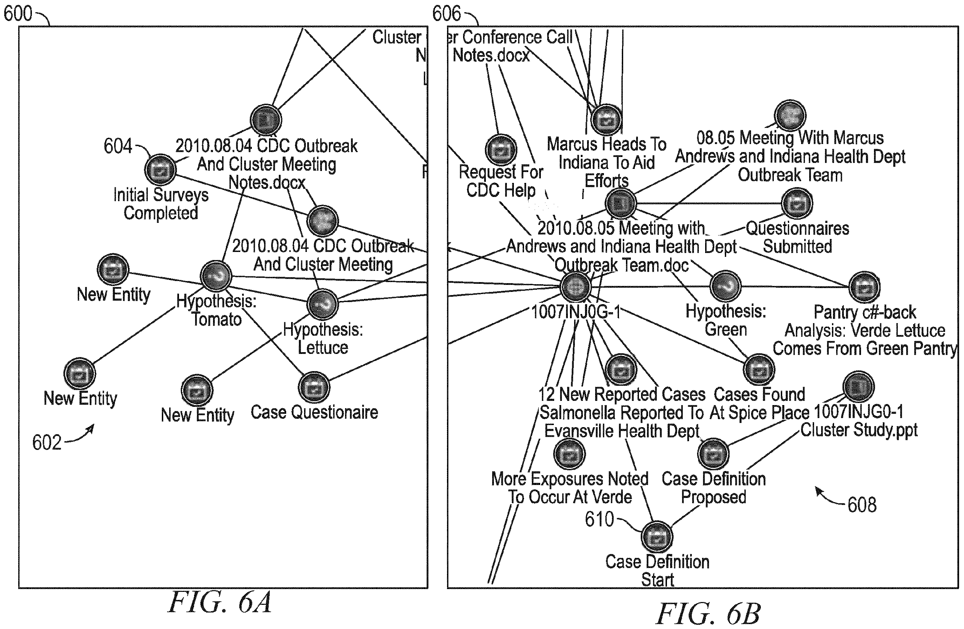

As an example, FIG. 6A illustrates a local view 600 of a first portion of a dataset (e.g., the dataset 402 discussed in reference to FIG. 4A and 4B). As shown, the local view 600 of the first portion of the dataset (e.g., dataset 402) includes a detailed representation of a subset 602 of the plurality of nodes (e.g., node 604). Each node may be represented by an icon, and each individual icon may have a corresponding data file (e.g., an image or icon file) stored in memory (e.g., on the client device 102). For example, the node 604 is represented by an image having a box and a checkmark, and the image is stored in memory as a data file.

Returning to FIG. 5, at operation 515, the interface module 200 receives user input requesting a view of a second portion of the graphical representation of the data set. For example, the user may request to view a portion of nodes not visible in the first portion of the graphical representation (e.g., a second subset of the plurality of nodes).

In response to receiving the user input requesting the view of the second portion of the graphical representation of the dataset, the rendering engine 210 stores a copy of a data file (e.g., icon files) corresponding to each node represented in the view of the first portion of the graphical representation, at operation 520. The rendering engine 210 may store the data files in a computer-readable medium of the client device 102 using a data structure such as a stack.

At operation 525, the rendering engine 210 selects a portion of the stored data files for reuse. The data files that are selected by the rendering engine 210 depend on a number of nodes included in the view of the second portion of the graphical representation. In other words, the rendering engine 210 selects as many of the stored data files as are needed to depict the nodes in the second portion of the graphical representation of the dataset.

At operation 530, the rendering engine 210 generates a view of the second portion of the graphical representation using the selected portion of the stored data files that previously represented the nodes included in the first portion. The view of the second portion of the graphical representation of the dataset includes a view of a second subset of the nodes in the dataset. If the number of nodes in the second portion exceeds the number of nodes included in the first portion, the generating of the view of the second portion of the graphical representation of the dataset may include generating additional data files to represent the additional nodes, or in the alternative, obtaining additional data files from the application server 114 to represent the additional nodes. By reusing the data files, which were previously used to represent nodes in the view of a first portion of the graphical representation, to render the view of the second portion of the graphical representation, the data graphing application 114 thereby reduces the amount of computational and network resources needed to render graphical representations of data when compared to traditional techniques.

At operation 535, the rendering engine 210 causes the view of the second portion of the graphical representation to be presented on the client device 102. As an example, FIG. 6B illustrates a local view 606 of a second portion of the dataset (e.g., the dataset 402 discussed in reference to FIGs. 4A-C). As shown, the local view 606 of the second portion of the dataset (e.g., dataset 402) includes a representation of a subset 608 of the plurality of nodes 404 discussed in reference to FIGs. 4A-C. At least a portion of the icons used to represent the subset 606 correspond to recycled data files that were previous used to represent nodes in the subset 602 of the plurality of nodes discussed above in reference to FIG. 6A. For example, as shown in FIG. 6B the image used to represent the node 604 (e.g., a box and checkmark) from FIG. 6A has been reused to represent a node 610.

### MODULES, COMPONENTS, AND LOGIC

Certain examples are described herein as including logic or a number of components, modules, or mechanisms. Modules may constitute either software modules (e.g., code embodied on a machine-readable medium) or hardware modules. A "hardware module" is a tangible unit capable of performing certain operations and may be configured or arranged in a certain physical manner. In various examples, one or more computer systems (e.g., a standalone computer system, a client computer system, or a server computer system) or one or more hardware modules of a computer system (e.g., a processor or a group of processors) may be configured by software (e.g., an application or application portion) as a hardware module that operates to perform certain operations as described herein.

A hardware module may be implemented mechanically, electronically, or any suitable combination thereof. For example, a hardware module may include dedicated circuitry or logic that is permanently configured to perform certain operations. For example, a hardware module may be a special-purpose processor, such as a Field-Programmable Gate Array (FPGA) or an Application Specific Integrated Circuit (ASIC). A hardware module may also include programmable logic or circuitry that is temporarily configured by software to perform certain operations. For example, a hardware module may include software executed by a general-purpose processor or other programmable processor. Once configured by such software, hardware modules become specific machines (or specific components of a machine) uniquely tailored to perform the configured functions and are no longer general-purpose processors. It will be appreciated that the decision to implement a hardware module mechanically, in dedicated and permanently configured circuitry, or in temporarily configured circuitry (e.g., configured by software) may be driven by cost and time considerations.

Accordingly, the phrase "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering examples in which hardware modules are temporarily configured (e.g., programmed), each of the hardware modules need not be configured or instantiated at any one instance in time. For example, where a hardware module comprises a general-purpose processor configured by software to become a special-purpose processor, the general-purpose processor may be configured as respectively different special-purpose processors (e.g., comprising different hardware modules) at different times. Software accordingly configures a particular processor or processors, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple hardware modules exist contemporaneously, communications may be achieved through signal transmission (e.g., over appropriate circuits and buses) between or among two or more of the hardware modules. In examples in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions described herein. As used herein, "processor-implemented module" refers to a hardware module implemented using one or more processors.

Similarly, the methods described herein may be at least partially processor-implemented, with a particular processor or processors being an example of hardware. For example, at least some of the operations of a method may be performed by one or more processors or processor-implemented modules. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an API).

The performance of certain of the operations may be distributed among the processors, not only residing within a single machine, but deployed across a number of machines. In some examples, the processors or processor-implemented modules may be located in a single geographic location (e.g., within a home environment, an office environment, or a server farm). In other examples, the processors or processor-implemented modules may be distributed across a number of geographic locations.

### EXAMPLE MACHINE ARCHITECTURE AND MACHINE-READABLE

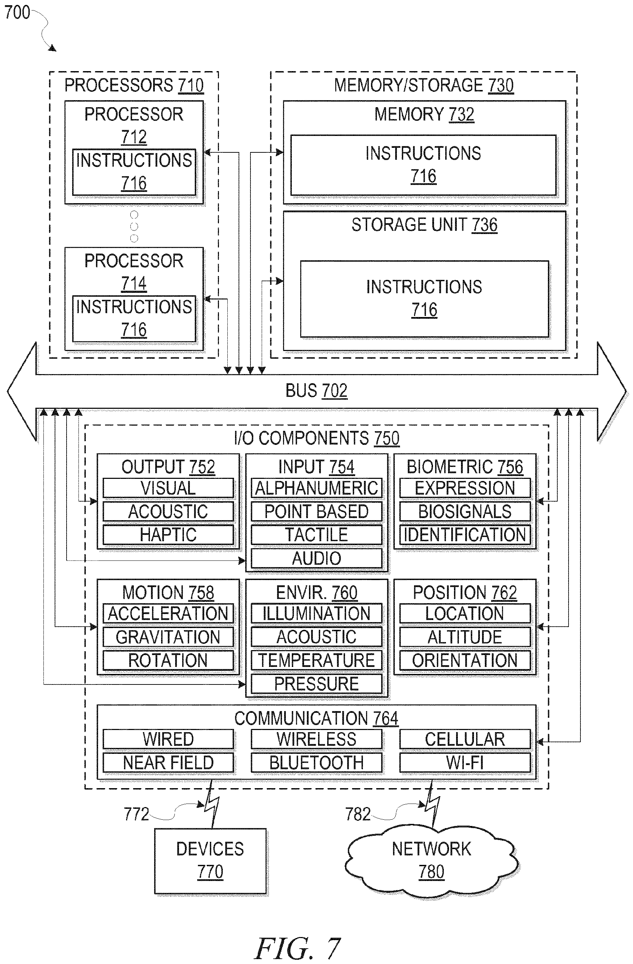

FIG. 7 is a block diagram illustrating components of a machine 700 able to read instructions from a machine-readable medium (e.g., a machine-readable storage medium) and perform any one or more of the methodologies discussed herein. Specifically, FIG. 7 shows a diagrammatic representation of the machine 700 in the example form of a computer system, within which instructions 716 (e.g., software, a program, an application, an applet, an app, or other executable code) for causing the machine 700 to perform any one or more of the methodologies discussed herein may be executed. For example the instructions may cause the machine to execute the flow diagrams of FIGs. 3 and 5. Additionally, or alternatively, the machine 700 may correspond to any one of the client device 102, the web server 112, or the application server 114. The instructions transform the general, non-programmed machine into a particular machine programmed to carry out the described and illustrated functions in the manner described. In alternative examples, the machine 700 operates as a standalone device or may be coupled (e.g., networked) to other machines. In a networked deployment, the machine 700 may operate in the capacity of a server machine or a client machine in a server-client network environment, or as a peer machine in a peer-to-peer (or distributed) network environment. The machine 700 may comprise, but not be limited to, a server computer, a client computer, a personal computer (PC), a tablet computer, a laptop computer, a netbook, a set-top box (STB), a PDA, an entertainment media system, a cellular telephone, a smart phone, a mobile device, a wearable device (e.g., a smart watch), a smart home device (e.g., a smart appliance), other smart devices, a web appliance, a network router, a network switch, a network bridge, or any machine capable of executing the instructions 716, sequentially or otherwise, that specify actions to be taken by machine 700. Further, while only a single machine 700 is illustrated, the term "machine" shall also be taken to include a collection of machines 700 that individually or jointly execute the instructions 716 to perform any one or more of the methodologies discussed herein.

The machine 700 may include processors 710, memory/storage 730, and I/O components 750, which may be configured to communicate with each other such as via a bus 702. In an example, the processors 710 (e.g., a Central Processing Unit (CPU), a Reduced Instruction Set Computing (RISC) processor, a Complex Instruction Set Computing (CISC) processor, a Graphics Processing Unit (GPU), a Digital Signal Processor (DSP), an ASIC, a Radio-Frequency Integrated Circuit (RFIC), another processor, or any suitable combination thereof) may include, for example, processor 712 and processor 714 that may execute instructions 716. The term "processor" is intended to include multi-core processor that may comprise two or more independent processors (sometimes referred to as "cores") that may execute instructions contemporaneously. Although FIG. 7 shows multiple processors, the machine 700 may include a single processor with a single core, a single processor with multiple cores (e.g., a multi-core process), multiple processors with a single core, multiple processors with multiples cores, or any combination thereof.

The memory/storage 730 may include a memory 732, such as a main memory, or other memory storage, and a storage unit 736, both accessible to the processors 710 such as via the bus 702. The storage unit 736 and memory 732 store the instructions 716 embodying any one or more of the methodologies or functions described herein. The instructions 716 may also reside, completely or partially, within the memory 732, within the storage unit 736, within at least one of the processors 710 (e.g., within the processor's cache memory), or any suitable combination thereof, during execution thereof by the machine 700. Accordingly, the memory 732, the storage unit 736, and the memory of processors 710 are examples of machine-readable media.

As used herein, "machine-readable medium" means a device able to store instructions and data temporarily or permanently and may include, but is not be limited to, random-access memory (RAM), read-only memory (ROM), buffer memory, flash memory, optical media, magnetic media, cache memory, other types of storage (e.g., Erasable Programmable Read-Only Memory (EEPROM)) and/or any suitable combination thereof. The term "machine-readable medium" should be taken to include a single medium or multiple media (e.g., a centralized or distributed database, or associated caches and servers) able to store instructions 716. The term "machine-readable medium" shall also be taken to include any medium, or combination of multiple media, that is capable of storing instructions (e.g., instructions 716) for execution by a machine (e.g., machine 700), such that the instructions, when executed by one or more processors of the machine 700 (e.g., processors 710), cause the machine 700 to perform any one or more of the methodologies described herein. Accordingly, a "machine-readable medium" refers to a single storage apparatus or device, as well as "cloud-based" storage systems or storage networks that include multiple storage apparatus or devices. The term "machine-readable medium" excludes signals per se.

The I/O components 750 may include a wide variety of components to receive input, provide output, produce output, transmit information, exchange information, capture measurements, and so on. The specific I/O components 750 that are included in a particular machine will depend on the type of machine. For example, portable machines such as mobile phones will likely include a touch input device or other such input mechanisms, while a headless server machine will likely not include such a touch input device. It will be appreciated that the I/O components 750 may include many other components that are not shown in FIG. 7. The I/O components 750 are grouped according to functionality merely for simplifying the following discussion and the grouping is in no way limiting. The I/O components 750 may include output components 752 and input components 754. The output components 752 may include visual components (e.g., a display such as a plasma display panel (PDP), a light emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 754 may include alphanumeric input components (e.g., a keyboard, a touch screen configured to receive alphanumeric input, a photo-optical keyboard, or other alphanumeric input components), point based input components (e.g., a mouse, a touchpad, a trackball, a joystick, a motion sensor, or other pointing instrument), tactile input components (e.g., a physical button, a touch screen that provides location and/or force of touches or touch gestures, or other tactile input components), audio input components (e.g., a microphone), and the like.

The I/O components 750 may include biometric components 756, motion components 758, environmental components 760, or position components 762 among a wide array of other components. For example, the biometric components 756 may include components to detect expressions (e.g., hand expressions, facial expressions, vocal expressions, body gestures, or eye tracking), measure biosignals (e.g., blood pressure, heart rate, body temperature, perspiration, or brain waves), identify a person (e.g., voice identification, retinal identification, facial identification, fingerprint identification, or electroencephalogram based identification), and the like. The motion components 758 may include acceleration sensor components (e.g., accelerometer), gravitation sensor components, rotation sensor components (e.g., gyroscope), and so forth. The environmental components 760 may include, for example, illumination sensor components (e.g., photometer), temperature sensor components (e.g., one or more thermometer that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detect concentrations of hazardous gases for safety or to measure pollutants in the atmosphere), or other components that may provide indications, measurements, or signals corresponding to a surrounding physical environment. The position components 762 may include location sensor components (e.g., a Global Position System (GPS) receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 750 may include communication components 764 operable to couple the machine 700 to a network 780 or devices 770 via coupling 782 and coupling 772, respectively. For example, the communication components 764 may include a network interface component or other suitable device to interface with the network 780. In further examples, communication components 764 may include wired communication components, wireless communication components, cellular communication components, Near Field Communication (NFC) components, Bluetooth® components (e.g., Bluetooth® Low Energy), Wi-Fi® components, and other communication components to provide communication via other modalities. The devices 770 may be another machine or any of a wide variety of peripheral devices (e.g., a peripheral device coupled via a Universal Serial Bus (USB)).

Moreover, the communication components 764 may detect identifiers or include components operable to detect identifiers. For example, the communication components 764 may include Radio Frequency Identification (RFID) tag reader components, NFC smart tag detection components, optical reader components (e.g., an optical sensor to detect one-dimensional bar codes such as Universal Product Code (UPC) bar code, multi-dimensional bar codes such as Quick Response (QR) code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 764, such as, location via Internet Protocol (IP) geo-location, location via Wi-Fi® signal triangulation, location via detecting a NFC beacon signal that may indicate a particular location, and so forth.

### TRANSMISSION MEDIUM

One or more portions of the network 780 may be an ad hoc network, an intranet, an extranet, a VPN, a LAN, a WLAN, a WAN, a WWAN, a MAN, the Internet, a portion of the Internet, a portion of the PSTN, a plain old telephone service (POTS) network, a cellular telephone network, a wireless network, a Wi-Fi® network, another type of network, or a combination of two or more such networks. For example, the network 780 or a portion of the network 780 may include a wireless or cellular network and the coupling 782 may be a Code Division Multiple Access (CDMA) connection, a Global System for Mobile communications (GSM) connection, or other type of cellular or wireless coupling. In this example, the coupling 782 may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High Speed Packet Access (HSPA), Worldwide Interoperability for Microwave Access (WiMAX), Long Term Evolution (LTE) standard, others defined by various standard setting organizations, other long range protocols, or other data transfer technology.

The instructions 716 may be transmitted or received over the network 780 using a transmission medium via a network interface device (e.g., a network interface component included in the communication components 764) and using any one of a number of well-known transfer protocols (e.g., hypertext transfer protocol (HTTP)). Similarly, the instructions 716 may be transmitted or received using a transmission medium via the coupling 772 (e.g., a peer-to-peer coupling) to devices 770. The term "transmission medium" shall be taken to include any intangible medium that is capable of storing, encoding, or carrying instructions 716 for execution by the machine 700, and includes digital or analog communications signals or other intangible medium to facilitate communication of such software.

### LANGUAGE

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

As used herein, the term "or" may be construed in either an inclusive or exclusive sense. Moreover, plural instances may be provided for resources, operations, or structures described herein as a single instance. Additionally, boundaries between various resources, operations, modules, engines, and data stores are somewhat arbitrary, and particular operations are illustrated in a context of specific illustrative configurations. Other allocations of functionality are envisioned and may fall within a scope of various embodiments of the present disclosure. In general, structures and functionality presented as separate resources in the example configurations may be implemented as a combined structure or resource. Similarly, structures and functionality presented as a single resource may be implemented as separate resources.

In this document, the terms "a" or "an" are used, as is common in patent documents, to include one or more than one, independent of any other instances or usages of "at least one" or "one or more." In the appended claims, the terms "including" and "in which" are used as the plain-English equivalents of the respective terms "comprising" and "wherein." Also, in the following claims, the terms "including" and "comprising" are open-ended; that is, a system, device, article, or process that includes elements in addition to those listed after such a term in a claim are still deemed to fall within the scope of that claim. Moreover, in the following claims, the terms "first," "second," "third," and so forth are used merely as labels, and are not intended to impose numerical requirements on their objects.

## Claims

1. A method comprising:
generating (305), using a processor of a client machine, a graphical representation of a dataset using a first rendering convention, the graphical representation of the dataset comprising a view of a plurality of nodes;
receiving (315) user input requesting a viewing scale adjustment for the graphical representation, the user input specifying a scale level for viewing the plurality of nodes;
determining (320), using said processor of said client machine, that the scale level specified by the user input is above a predefined threshold; and
in response to determining that the scale level is above the predefined threshold, updating (330), using said processor of said client machine, the graphical representation of the dataset using a second rendering convention, the updated graphical representation comprising a scaled view of the plurality of nodes;
wherein the first rendering convention involves using a hypertext modelling language (HTML) canvas element,
wherein the second rendering convention involves rendering nodes in a domain object model (DOM), and
wherein the predefined threshold is set by an administrator to optimize the quality of the graphical representation as learned by analyzing rendering quality at various scale levels to identify a breakpoint in quality.

2. The method of claim 1, wherein the method further comprises presenting (335) the updated graphical representation on a display communicatively coupled to the client machine.

3. The method of claim 1 or claim 2, further comprising transmitting the dataset to the client machine via an interface of a server machine.

4. The method of any one preceding claim, wherein the scaled view includes a subset of the plurality of nodes scaled according to the scale level specified by the user input.

5. The method of claim 4, wherein the method further comprises:
receiving additional user input requesting an additional view of a different subset of the plurality of nodes; and
performing, using said processor of said client machine, an additional update to the updated graphical representation using the second rendering convention, the performing of the additional update including rendering the additional view of the different subset of the plurality of nodes.

6. The method of claim 5, wherein the rendering of the additional view of the different subset of the plurality of nodes comprises:
storing a representation of each node of the subset of the plurality of nodes in an intermediate storage medium;
selecting a portion of the stored representations of the subset of the plurality of nodes for reuse; and
generating the additional view of the different subset of the plurality of nodes using the portion of stored representations of the subset of the plurality of nodes.

7. The method of any one preceding claim 1, wherein the updating of the graphical representation comprises rendering textual information associated with each node of the plurality of nodes.

8. The method of any one preceding claim, wherein the updating of the graphical representation comprises resizing each node of the plurality of nodes.

9. The method of any one preceding claim, wherein the method further comprises:
receiving additional user input requesting an additional viewing scale adjustment for the graphical representation, the additional viewing scale adjustment specifying a further scale level for viewing a portion of the plurality of nodes ;
determining, using said processor of said client machine, that the further scale level is below the predefined threshold; and
in response to determining that the further scale level is below the predefined threshold, performing, using said processor of said client machine, an additional update to the updated graphical representation using the first rendering convention, the performing of the additional update including rendering a view of the portion of the plurality of nodes.

10. A computer program comprising computer readable instructions that, when executed by a computing apparatus, cause the computing apparatus to perform the method of any preceding claim.

11. A system comprising:
an interface module (200) configured to receive user input requesting a viewing scale adjustment for a graphical representation of a dataset, the graphical representation of the dataset including a plurality of nodes, the user input specifying a scale level for viewing the plurality of nodes;
a rendering engine (210), comprising one or more processors, configured to generate a graphical representation of the dataset using a first rendering convention, the rendering engine further configured to determine that the scale level specified by the user input is above a predefined threshold, and in response to determining that the scale level is above the predefined threshold, update the graphical representation of the dataset using a second rendering convention, the updated graphical representation comprising a scaled view of the plurality of nodes; and
wherein the first rendering convention involves using a hypertext modelling language (HTML) canvas element,
wherein the second rendering convention involves rendering nodes in a domain object model (DOM), and
wherein the predefined threshold is set by an administrator to optimize the quality of the graphical representation as learned by analyzing rendering quality at various scale levels to identify a breakpoint in quality.

12. The system of claim 11, further comprising a data retrieval module (205) configured to retrieve the dataset from a user specified location.

13. The system of claim 11 or claim 12, wherein the interface module is further configured to cause the updated graphical representation to be presented on a display of the client machine.

## Patentansprüche

1. Verfahren, umfassend:
Erzeugen (305), unter Nutzung eines Prozessors einer Client-Maschine, einer grafischen Darstellung eines Datensatzes unter Nutzung einer ersten Wiedergabekonvention, wobei die grafische Darstellung des Datensatzes eine Ansicht einer Vielzahl von Knoten umfasst;
Empfangen (315) einer Benutzereingabe, die eine Ansichtsskalierungsanpassung für die grafische Darstellung anfordert, wobei die Benutzereingabe eine Skalierungsstufe zum Betrachten der Vielzahl von Knoten angibt;
Ermitteln (320), unter Nutzung des Prozessors der Client-Maschine, dass die Skalierungsstufe, die durch die Benutzereingabe angegeben wurde, über einem vordefinierten Schwellenwert liegt; und
in Reaktion auf das Ermitteln, dass die Skalierungsstufe über dem vordefinierten Schwellenwert liegt, Aktualisieren (330), unter Nutzung des Prozessors der Client-Maschine, der grafischen Darstellung des Datensatzes unter Nutzung einer zweiten Wiedergabekonvention, wobei die aktualisierte grafische Darstellung eine skalierte Ansicht der Vielzahl von Knoten umfasst;
wobei die erste Wiedergabekonvention die Verwendung eines Hypertext-Modellierungssprachen(HTML)-Canvas-Elements beinhaltet,
wobei die zweite Wiedergabekonvention ein Wiedergeben von Knoten in einem Domänenobjektmodell (DOM) umfasst, und
wobei der vordefinierte Schwellenwert von einem Administrator festgelegt wird, um die Qualität der grafischen Darstellung, wie durch Analysieren der Wiedergabequalität auf verschiedenen Skalierungsstufen gelernt, zu optimieren, um einen Qualitätsbruchpunkt zu identifizieren.

2. Verfahren nach Anspruch 1, wobei das Verfahren ferner ein Präsentieren (335) der aktualisierten grafischen Darstellung auf einer Anzeige umfasst, die mit der Client-Maschine kommunikativ gekoppelt ist.

3. Verfahren nach Anspruch 1 oder Anspruch 2, ferner umfassend Übertragen des Datensatzes an die Client-Maschine über eine Schnittstelle einer Server-Maschine.

4. Verfahren nach einem der vorhergehenden Ansprüche, wobei die skalierte Ansicht eine Teilmenge der Vielzahl von Knoten beinhaltet, die gemäß der durch die Benutzereingabe spezifizierten Skalierungsstufe skaliert sind.

5. Verfahren nach Anspruch 4, wobei das Verfahren ferner Folgendes umfasst:
Empfangen einer zusätzlichen Benutzereingabe, die eine zusätzliche Ansicht einer unterschiedlichen Teilmenge der Vielzahl von Knoten anfordert; und
Durchführen, unter Nutzung des Prozessors der Client-Maschine, einer zusätzlichen Aktualisierung der aktualisierten grafischen Darstellung unter Nutzung der zweiten Wiedergabekonvention, wobei das Durchführen der zusätzlichen Aktualisierung ein Wiedergeben der zusätzlichen Ansicht der unterschiedlichen Teilmenge der Vielzahl von Knoten beinhaltet.

6. Verfahren nach Anspruch 5, wobei das Wiedergeben der zusätzlichen Ansicht der unterschiedlichen Teilmenge der Vielzahl von Knoten Folgendes umfasst:
Speichern einer Darstellung eines jeden Knotens der Teilmenge der Vielzahl von Knoten auf einem Zwischenspeichermedium;
Auswählen eines Teils der gespeicherten Darstellungen der Teilmenge der Vielzahl von Knoten zur Wiederverwendung; und
Erzeugen der zusätzlichen Ansicht der unterschiedlichen Teilmenge der Vielzahl von Knoten unter Nutzung des Teils von gespeicherten Darstellungen der Teilmenge der Vielzahl von Knoten.

7. Verfahren nach einem der vorhergehenden Ansprüche 1, wobei das Aktualisieren der grafischen Darstellung ein Wiedergeben von Textinformationen umfasst, die mit jedem Knoten der Vielzahl von Knoten assoziiert sind.

8. Verfahren nach einem der vorhergehenden Ansprüche, wobei das Aktualisieren der grafischen Darstellung ein Ändern der Größe jedes Knotens der Vielzahl von Knoten umfasst.

9. Verfahren nach einem der vorhergehenden Ansprüche, wobei das Verfahren ferner Folgendes umfasst:
Empfangen einer zusätzlichen Benutzereingabe, die eine zusätzliche Ansichtsskalierungsanpassung für die grafische Darstellung anfordert, wobei die zusätzliche Ansichtsskalierungsanpassung eine weitere Skalierungsstufe zum Betrachten eines Teils der Vielzahl von Knoten spezifiziert;
Ermitteln, unter Nutzung des Prozessors der Client-Maschine, dass die weitere Skalierungsstufe unter dem vordefinierten Schwellenwert liegt; und
in Reaktion auf das Ermitteln, dass die weitere Skalierungsstufe unter dem vordefinierten Schwellenwert liegt, Durchführen, unter Verwendung des Prozessors der Client-Maschine, einer zusätzlichen Aktualisierung der aktualisierten grafischen Darstellung unter Nutzung der ersten Wiedergabekonvention, wobei das Durchführen der zusätzlichen Aktualisierung ein Wiedergeben einer Ansicht des Teils der Vielzahl von Knoten umfasst.

10. Computerprogramm, das computerlesbare Anweisungen umfasst, die, bei Ausführung durch eine Computervorrichtung, die Computervorrichtung veranlassen, das Verfahren nach einem der vorhergehenden Ansprüche durchzuführen.

11. System, umfassend:
ein Schnittstellenmodul (200), das konfiguriert ist, Benutzereingaben zu empfangen, die eine Ansichtsskalierungsanpassung für eine grafische Darstellung eines Datensatzes anfordern, wobei die grafische Darstellung des Datensatzes eine Vielzahl von Knoten beinhaltet, wobei die Benutzereingabe eine Skalierungsstufe zum Betrachten der Vielzahl von Knoten angibt;
eine Wiedergabe-Engine (210), umfassend einen oder mehrere Prozessoren, die konfiguriert ist, eine grafische Darstellung des Datensatzes unter Nutzung einer ersten Wiedergabekonvention zu erzeugen, wobei die Wiedergabe-Engine ferner konfiguriert ist, zu ermitteln, dass die durch die Benutzereingabe angegebene Skalierungsstufe über einem vordefinierten Schwellenwert liegt, und, in Reaktion auf das Ermitteln, dass die Skalierungsstufe über dem vordefinierten Schwellenwert liegt, die grafische Darstellung des Datensatzes unter Nutzung einer zweiten Wiedergabekonvention zu aktualisieren, wobei die aktualisierte grafische Darstellung eine skalierte Ansicht der Vielzahl von Knoten umfasst; und
wobei die erste Wiedergabekonvention ein Verwenden eines Hypertext-Modellierungssprachen(HTML)-Canvas-Elements umfasst,
wobei die zweite Wiedergabekonvention ein Wiedergeben von Knoten in einem Domänenobjektmodell (DOM) umfasst, und
wobei der vordefinierte Schwellenwert von einem Administrator festgelegt wird, um die Qualität der grafischen Darstellung, wie durch Analysieren der Wiedergabequalität auf verschiedenen Skalierungsstufen erlernt, zu optimieren, um einen Qualitätsbruchpunkt zu identifizieren.

12. System nach Anspruch 11, ferner umfassend ein Datenabrufmodul (205), das konfiguriert ist, den Datensatz von einem durch einen Benutzer angegebenen Ort abzurufen.

13. System nach Anspruch 11 oder Anspruch 12, wobei das Schnittstellenmodul ferner konfiguriert ist, zu bewirken, dass die aktualisierte grafische Darstellung auf einer Anzeige der Client-Maschine dargestellt wird.

## Revendications

1. Procédé comprenant :
la génération (305), à l'aide d'un processeur d'une machine cliente, d'une représentation graphique d'un ensemble de données à l'aide d'une première convention de rendu, la représentation graphique de l'ensemble de données comprenant une visualisation d'une pluralité de nœuds ;
la réception (315) d'une entrée utilisateur demandant un ajustement d'échelle de visualisation pour la représentation graphique, l'entrée utilisateur spécifiant un niveau d'échelle pour la visualisation de la pluralité de nœuds ;
la détermination (320), à l'aide dudit processeur de ladite machine cliente, que le niveau d'échelle spécifié par l'entrée utilisateur dépasse un seuil prédéfini ; et
en réponse à la détermination que le niveau d'échelle est supérieur au seuil prédéfini, la mise à jour (330) à l'aide dudit processeur de ladite machine cliente, de la représentation graphique de l'ensemble de données à l'aide d'une deuxième convention de rendu, la représentation graphique mise à jour comprenant une visualisation à l'échelle de la pluralité de nœuds
dans lequel la première convention de rendu implique l'utilisation d'un élément de canevas HTML (Langage de Modélisation Hypertexte),
dans lequel la deuxième convention de rendu implique des nœuds de rendu dans un modèle objet de domaine (DOM), et
dans lequel le seuil prédéfini est défini par un administrateur pour optimiser la qualité de la représentation graphique comme appris par l'analyse de la qualité de rendu à différents niveaux d'échelle afin d'identifier un point de rupture en qualité.

2. Procédé selon la revendication 1, dans lequel le procédé comprend en outre la présentation (335) de la représentation graphique mise à jour sur un affichage couplé de manière communicative à la machine cliente.

3. Procédé selon la revendication 1 ou la revendication 2, comprenant en outre la transmission de l'ensemble de données à la machine cliente via une interface d'une machine serveur.

4. Procédé selon l'une quelconque des revendications précédentes, dans lequel la visualisation à l'échelle comprend un sous-ensemble de la pluralité de nœuds mis à l'échelle selon le niveau d'échelle spécifié par l'entrée utilisateur.

5. Procédé selon la revendication 4, dans lequel le procédé comprend en outre :
la réception d'une entrée utilisateur supplémentaire demandant une visualisation supplémentaire d'un sous-ensemble différent de la pluralité de nœuds ; et
l'exécution, à l'aide dudit processeur de ladite machine cliente, d'une mise à jour supplémentaire de la représentation graphique mise à jour à l'aide de la deuxième convention de rendu, l'exécution de la mise à jour supplémentaire comprenant le rendu de la visualisation supplémentaire du sous-ensemble différent de la pluralité de nœuds.

6. Procédé selon la revendication 5, dans lequel le rendu de la visualisation supplémentaire du sous-ensemble différent de la pluralité de nœuds comprend :
le stockage d'une représentation de chaque nœud du sous-ensemble de la pluralité de nœuds dans un support de stockage intermédiaire ;
la sélection d'une partie des représentations stockées du sous-ensemble de la pluralité de nœuds pour réutilisation ; et
la génération de la visualisation supplémentaire du sous-ensemble différent de la pluralité de nœuds à l'aide de la partie de représentations stockées du sous-ensemble de la pluralité de nœuds.

7. Procédé selon l'une quelconque des revendications précédentes 1, dans lequel la mise à jour de la représentation graphique comprend des informations textuelles de rendu associées à chaque nœud de la pluralité de nœuds.

8. Procédé selon l'une quelconque des revendications précédentes, dans lequel la mise à jour de la représentation graphique comprend le redimensionnement de chaque nœud de la pluralité de nœuds.

9. Procédé selon l'une quelconque des revendications précédentes, dans lequel le procédé comprend en outre :
la réception d'une entrée utilisateur supplémentaire demandant un ajustement de l'échelle de visualisation supplémentaire pour la représentation graphique, l'ajustement de l'échelle de visualisation supplémentaire spécifiant un niveau d'échelle supplémentaire pour la visualisation d'une partie de la pluralité de nœuds ;
la détermination, à l'aide dudit processeur de ladite machine cliente, que le niveau de l'échelle supplémentaire est inférieur au seuil prédéfini ; et
en réponse à la détermination que le niveau de l'échelle supplémentaire est inférieur au seuil prédéfini, l'exécution, à l'aide dudit processeur de ladite machine cliente, d'une mise à jour supplémentaire sur la représentation graphique mise à jour à l'aide de la première convention de rendu, la réalisation de la mise à jour supplémentaire comprenant le rendu d'une visualisation de la partie de la pluralité de nœuds.

10. Programme informatique comprenant des instructions lisibles par ordinateur qui, lorsqu'elles sont exécutées par un appareil informatique, amènent l'appareil informatique à exécuter le procédé selon l'une quelconque des revendications précédentes.

11. Système comprenant :
un module d'interface (200) configuré pour recevoir une entrée utilisateur demandant un ajustement de l'échelle de visualisation pour une représentation graphique d'un ensemble de données, la représentation graphique de l'ensemble de données comprenant une pluralité de nœuds, l'entrée utilisateur spécifiant un niveau d'échelle pour la visualisation de la pluralité de nœuds ;
un moteur de rendu (210), comprenant un ou plusieurs processeurs, configurés pour générer une représentation graphique de l'ensemble de données à l'aide d'une première convention de rendu, le moteur de rendu étant en outre configuré pour déterminer que le niveau d'échelle spécifié par l'entrée de l'utilisateur est supérieur à un seuil prédéfini, et en réponse à la détermination que le niveau d'échelle est supérieur au seuil prédéfini, mettre à jour la représentation graphique de l'ensemble de données à l'aide d'une deuxième convention de rendu, la représentation graphique mise à jour comprenant une visualisation à l'échelle de la pluralité de nœuds ; et
dans lequel la première convention de rendu implique l'utilisation d'un élément de canevas HTML (Langage de Modélisation Hypertexte),
dans lequel la deuxième convention de rendu implique des nœuds de rendu dans un modèle objet de domaine (DOM), et
dans lequel le seuil prédéfini est défini par un administrateur pour optimiser la qualité de la représentation graphique comme appris par l'analyse de la qualité de rendu à différents niveaux d'échelle afin d'identifier un point de rupture en qualité.

12. Système selon la revendication 11, comprenant en outre un module de récupération de données (205) configuré pour récupérer l'ensemble de données à partir d'un emplacement spécifié par l'utilisateur.

13. Système selon la revendication 11 ou la revendication 12, dans lequel le module d'interface est configuré en outre pour amener la représentation graphique mise à jour à être présentée sur un affichage de la machine cliente.
